# FASCICULE DE BREVET EUROPEEN

(11) **EP 0 845 407 B1**
(45) Date de publication et mention de la délivrance du brevet: **25.10.2000**
(21) Numéro de dépôt: 97402900.1
(22) Date de dépôt: 02.12.1997
(51) Int. Cl.: B62K 13/04, B62K 9/02

(54) **Cycle évolutif**
In ein Fahrrad umwandelbares Dreirad
Tricycle transformable to bicycle.

(30) Priorité: 02.12.1996 FR 9614762
(43) Date de publication de la demande: 03.06.1998
(73) Titulaire: X-Hold, 37320 Cormery (FR)
(72) Inventeur: Prea, François, 37550 Saint Avertin (FR)
(74) Mandataire: Pochart, François

(56) Documents cités:
- EP-A- 0 187 170
- EP-A- 0 668 209
- DE-A- 3 831 629
- DE-C- 28 381
- FR-A- 2 611 641
- US-A- 3 532 351

## Description

La présente invention a pour objet un cycle évolutif entre une configuration tricycle et une configuration bicyclette, ainsi qu'une bicyclette et un tricycle correspondants.

Il existe, à l'usage des enfants dès l'âge de deux ans, des tricycles. Il existe en outre, à l'usage des enfants plus âgés, des bicyclettes, présentant le cas échéant des stabilisateurs latéraux. En soi, chacun de ces dispositifs connus donne satisfaction.

EP-A-0187170 décrit une bicyclette présentant un support de roue arrière sous forme de poutre, dans laquelle est intégrée une transmission à chaîne. Dans cette bicyclette, comme dans celle de FR-A-2611641, la roue arrière est fixée en porte à faux sur le cadre de la bicyclette.

L'invention apporte une solution au problème nouveau de l'évolution des cycles, notamment des cycles à l'usage des enfants. De fait, en fonction du développement psychomoteur des enfants, les parents ayant acheté un tricycle doivent plus ou moins rapidement procéder à l'achat d'une bicyclette, avec stabilisateurs latéraux amovibles. Outre le problème du coût se pose un problème d'apprentissage; ces deux problèmes sont tous résolus grâce à l'invention.

On connaît déjà des cycles qui se transforment de bicyclette en tricycle. Ainsi, DE-A-28381 (1883) décrit la transformation d'un cycle de bicyclette en tricycle et vice-versa. La solution proposée dans ce document n'est cependant pas satisfaisante car elle nécessite de procéder à des modifications techniques très lourdes, puisqu'il est nécessaire selon ce document de changer la totalité du système arrière;: en effet l'arbre portant les deux roues arrière est démonté entièrement pour être remplacé par un arbre unique portant la roue arrière lorsque le cycle passe de la configuration tricycle à la configuration bicyclette.

DE-A-3831629 (1990) décrit une autre solution à ce problème de transformabilité. Selon ce document, pour passer de la configuration bicycle à la configuration tricycle, on remplace la roue arrière d'un bicycle traditionnel par le dispositif d'entraînement décrit dans ce document. Ce dispositif d'entraînement comprend une partie centrale d'entraînement fixée au cadre du vélo. De chaque côté de la partie centrale d'entraînement est fixée de façon amovible une partie latérale portant chacune une roue. Ces deux parties latérales sont amovibles pour faciliter le transport du tricycle notamment dans le coffre d'une voiture. La solution de ce document est techniquement complexe.

US-P-3532351 (1970) décrit un cycle se transformant d'un cycle à un tricycle, avec en position tricycle une roue motrice seulement. Cette transformation s'effectue par rotation d'un bloc arrière, ce bloc arrière supportant les deux roues du tricycle, une roue supportant un axe venant s'engager dans le mécanisme moteur à l'arrière. Cette solution est non seulement techniquement complexe, mais de plus nécessite un outillage et une habileté importants.

Tous ces documents de l'art antérieur présentent des solutions techniques lourdes, qui nécessitent un outillage important et qui sont difficilement mises en oeuvre par les parents de l'enfant. L'invention offre une solution simple, ne nécessitant qu'un outillage restreint voire pas d'outillage et facile d'emploi.

L'invention propose un cycle évolutif entre une configuration tricycle et une configuration bicyclette, comprenant un cadre, avec
- dans la configuration bicyclette, un arbre de bicyclette monté sur le cadre et pouvant supporter une roue arrière ; et
- dans la configuration tricycle, en outre un arbre de tricycle pouvant supporter une deuxième roue arrière, et susceptible d'être couplé avec ledit arbre de bicyclette pour former un arbre supportant deux roues et monté sur le cadre,

l'arbre de bicyclette comprenant à une extrémité des moyens d'accouplement soit au cadre, soit à l'arbre de tricycle, et à l'autre extrémité des moyens de support d'une roue,
l'arbre de tricycle comprenant à une extrémité des moyens d'accouplement à l'arbre de bicyclette, à l'autre extrémité des moyens de support d'une roue, et, entre les moyens d'accouplement à l'arbre de bicyclette et les moyens de support d'une roue, des moyens de fixation au cadre.

Selon un mode de réalisation, les moyens d'accouplement de l'arbre de tricycle sont formés par un rétreint à l'extrémité de celui-ci, permettant à l'arbre de tricycle de s'engager dans l'arbre de bicyclette.

Selon un autre mode de réalisation, les moyens d'accouplement de l'arbre de tricycle sont formés par un adaptateur, permettant à l'arbre de tricycle de se solidariser de l'arbre de bicyclette.

Selon un autre mode de réalisation, l'arbre de bicyclette est confondu avec la roue qu'il supporte. Selon ce mode de réalisation, la roue peut comprendre un évidemment avec une section de grand diamètre pour montage bicyclette et une section de diamètre plus faible pour montage tricycle.

Les moyens de support d'une roue sont avantageusement susceptibles de recevoir des roues de diamètre variable ou différent.

On peut prévoir que le cadre comprend un bras monopoutre monté sur la partie avant du cadre et sur lequel la roue est montée en porte à faux dans la configuration bicyclette.

Dans un mode de réalisation, le bras monopoutre est monté sur la partie avant du cadre par une suspension.

Le bras monopoutre peut être détachable de la partie avant du cadre.

Selon une première variante, la suspension est intégrée au bras monopoutre au voisinage de la fixation du bras monopoutre sur le reste du cadre.

Selon une autre variante, le bras monopoutre est monté sur le reste du cadre par l'intermédiaire d'un amortisseur externe.

La transmission peut être intégrée au bras monopoutre, et entraîner l'arbre de bicyclette ou de tricycle. Elle peut présenter un mécanisme de roue libre.

Les roues du cycle peuvent aussi présenter un mécanisme de roue libre et/ou un mécanisme de blocage par rétropédalage.

Dans un mode de réalisation, le cycle présente une fourche avant montée sur le cadre et supportant une roue avant en porte à faux.

L'invention a enfin pour objet une bicyclette, constituée d'un cycle évolutif selon l'un de ces modes de réalisation, dans sa configuration bicyclette.

Selon un mode de réalisation, la bicyclette comporte des stabilisateurs latéraux fixés sur le cadre par l'intermédiaire d'un étrier, une semelle en caoutchouc étant présente entre l'étrier et le cadre.

Selon un autre mode de réalisation, la bicyclette comporte des stabilisateurs latéraux réglables en hauteur.

D'autres avantages et caractéristiques de l'invention apparaîtront à la lecture de la description qui suit d'un mode de réalisation de l'invention, donné à titre d'exemple uniquement et en référence aux dessins annexés, qui montrent:
- figure 1: une vue en perspective d'un cycle selon l'invention, dans la configuration "tricycle";
- figure 2: une vue en perspective du cycle de la figure 1 dans la configuration bicyclette;
- la figure 3: une vue partielle en coupe du cycle de l'invention, au voisinage de la fixation du bras monopoutre sur le reste du cadre;
- la figure 4: une vue partielle en coupe du cycle de l'invention, dans le plan IV-IV de la figure 3;
- les figures 5a et 5b sont des vues partielles en coupe du cycle de l'invention, montrant le système de transmission;
- la figure 6: une vue partielle en coupe du bras monopoutre de l'invention, dans un plan parallèle au plan longitudinal du cycle;
- les figures 7a, 7b, 7c sont des coupes partielles du cycle de l'invention, dans la configuration tricycle, au niveau des roues arrière, selon diverses variantes de l'invention;
- la figure 8: une vue à plus grande échelle des moyens d'accouplement de la figure 7;
- la figure 9: une vue à plus grande échelle des moyens de fixation de la figure 7;
- la figure 10: une vue en coupe à plus grande échelle du cycle de l'invention dans la configuration bicyclette, au niveau de la roue arrière;
- la figure 11: une vue analogue à celle de la figure 8, dans un deuxième mode de réalisation des moyens d'accouplement de la figure 7;
- la figure 12: une vue analogue à celle de la figure 10, dans un deuxième mode de réalisation des moyens d'accouplement de la figure 7;
- la figure 13: une vue analogue à celle de la figure 8, dans un troisième mode de réalisation des moyens d'accouplement de la figure 7;
- la figure 14: une vue analogue à celle de la figure 10, dans un troisième mode de réalisation des moyens d'accouplement de la figure 7;
- les figures 15a et 15b: une vue d'un mode de fixation sur la cadre du tube formant support du bras monopoutre;
- les figures 16a et 16b: une vue à plus grande échelle d'un mode de fixation du bras monopoutre par l'intermédiaire d'un amortisseur externe.
- les figures 17a et 17b: une vue à plus grande échelle d'un mode de fixation des stabilisateurs latéraux.

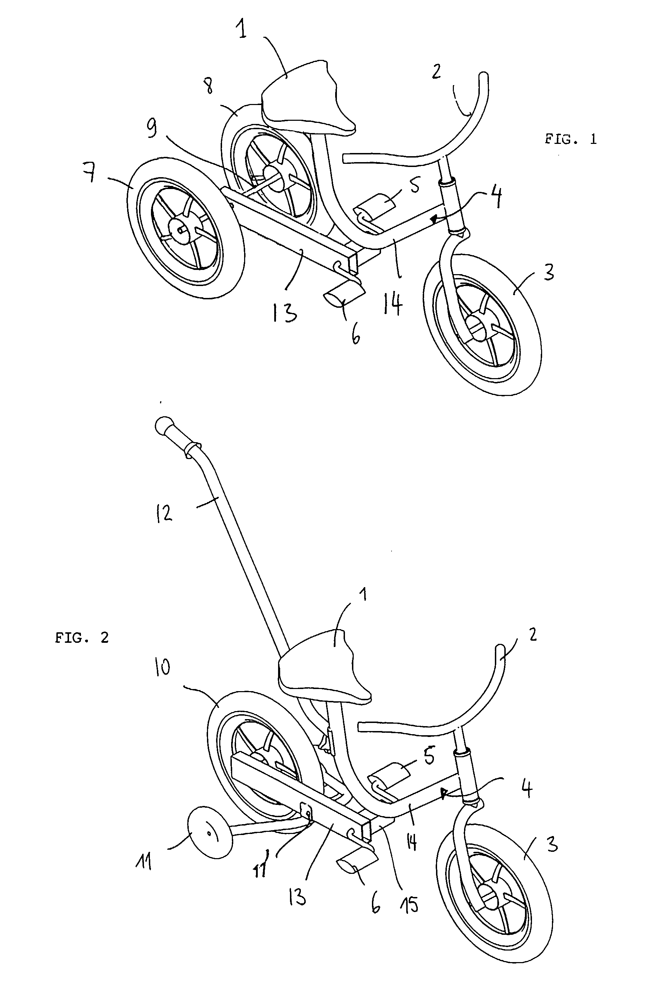

La figure 1 montre une vue en perspective d'un cycle selon l'invention, dans la configuration "tricycle". On reconnaît sur la figure tous les éléments classiques d'un tricycle: selle 1, guidon 2, roue avant 3, cadre 4, pédales 5 et 6, roues arrière 7 et 8 reliées par un arbre 9. Dans cette configuration du cycle de l'invention, le centre de gravité du cycle se trouve sur l'arbre 9, sensiblement au milieu de l'arbre, de sorte à assurer la stabilité de l'ensemble. Le cadre 4 comprend en fait dans le mode de réalisation représenté une partie avant 14 et un bras monopoutre 13.

La figure 2 montre une vue en perspective du cycle de la figure 1, dans la configuration "bicyclette". Selon l'invention, on atteint cette configuration par une transformation simple du cycle, comme expliqué plus bas. On reconnaît sur la figure 2 les éléments de la figure 1: toutefois, le cycle de la figure 2 ne comprend plus qu'une seule roue arrière 10, montée en porte à faux sur le cadre 4. On a aussi représenté sur la figure 2 deux accessoires qui peuvent si nécessaire être montés sur le cycle: des stabilisateurs latéraux 11 ou "petites roues", ainsi qu'une barre 12 permettant de pousser et guider le cycle. Cette barre peut d'ailleurs aussi être montée sur le cycle dans sa configuration tricycle représentée à la figure 1. Dans la configuration "bicyclette", le centre de gravité du cycle se trouve sur une ligne située dans le plan des roues avant 3 et arrière 10. Les stabilisateurs latéraux 11 peuvent être fixés au cadre 4 (ici au niveau du bras monopoutre 13) de façon classique par un étrier 11'. De façon avantageuse, on peut disposer une semelle ou joint en caoutchouc entre l'étrier 11' et le cadre 4 de sorte à permettre une rotation partielle des stabilisateurs, et donc un léger débattement en hauteur. Ces stabilisateurs peuvent donc "épouser" les formes du terrain, permettant ainsi à la roue arrière d'être en contact permanent avec le sol. On évite ainsi la situation où le cycle ne repose que sur les stabilisateurs, la roue arrière motrice tournant dans le vide empêchant ainsi la propulsion.

La transformation de configuration du cycle selon l'invention, d'une configuration "tricycle" - figure 1 - à une configuration "bicyclette" - figure 2 - permet d'apporter une solution simple, économique et élégante aux problèmes de l'art antérieur. L'utilisation d'un cycle unique diminue l'investissement nécessaire et facilite l'apprentissage.

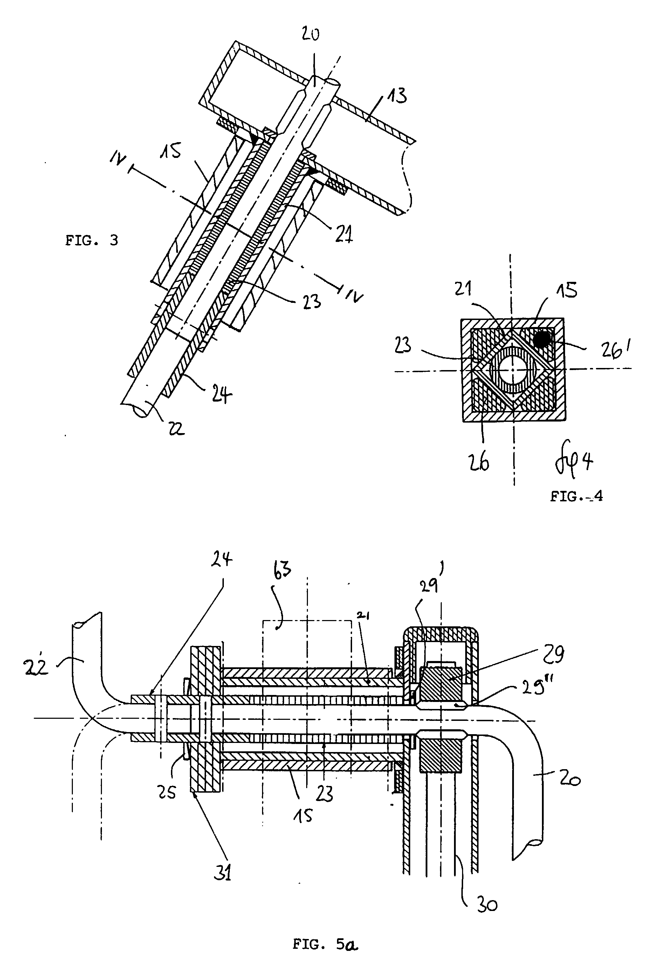

Selon un mode de réalisation avantageux de l'invention, on utilise dans la partie arrière du cadre, pour supporter la ou les roue(s) et assurer la transmission de l'énergie entre le pédalier et la ou les roue(s), un bras monopoutre 13. Le bras monopoutre 13 est décalé latéralement par rapport au plan médian du vélo. La roue arrière 10 dans la configuration bicyclette est en porte à faux sur le bras 13, de sorte à se trouver dans le plan médian du vélo. En configuration tricycle, l'arbre 9 est monté sur le bras 13, de sorte que le milieu de l'arbre 9 se trouve dans le plan médian du vélo, c'est-à-dire décalé par rapport au bras 13. Le bras 13 est décrit plus en détail en référence aux figures 3 à 6.

On peut voir partiellement sur la figure 2 un mode de fixation avantageux du bras 13 sur la partie avant 14 du cadre 4: un tube de section carrée 15 est fixé, par exemple, par soudage, sur la partie avant 14 du cadre 4, qui supporte la selle et la roue avant; ce tube sert de support pour le bras monopoutre 13. Le bras monopoutre 13 présente au voisinage de son extrémité avant un tube latéral qui s'engage dans le tube de section carrée 15 pour assurer le maintien du bras monopoutre. Le tube latéral peut présenter une section extérieure carrée correspondant à la section intérieure du tube 15, de sorte à assurer un assemblage sans jeu. On peut aussi prévoir un système d'amortisseur comme décrit en référence aux figures 3 et 4.

La figure 3 montre une vue partielle en coupe du cycle de l'invention, au voisinage de la fixation du bras monopoutre sur le reste du cadre, dans un plan horizontal pour le cycle en position d'utilisation. On reconnaît sur la figure 3 le bras monopoutre 13, l'extrémité d'une manivelle de pédale droite 20 qui traverse le bras 13, le tube de section carrée 15 et le tube latéral 21 fixé sur la poutre 13 par soudage et l'extrémité d'une manivelle de pédale gauche 22. L'extrémité de la manivelle de pédale droite 20 est entourée d'un coussinet 23 et présente dans le prolongement du coussinet 23 un cylindre extérieur en saillie 24 monté par collage ou goupillage sur l'axe 20; l'extrémité de la manivelle de pédale gauche 22 peut s'engager dans le cylindre 24 et y être fixée par collage ou goupillage. On peut prévoir que la manivelle de pédale 22 et le cylindre extérieur 24 soient solidaires l'un de l'autre. De cette façon, on peut fixer le bras monopoutre en introduisant le tube carré 21 d'un côté et en le fixant de l'autre côté par solidarisation (par ex. par vis) du cylindre 24 sur l'axe 20

La figure 4 montre une vue partielle en coupe du cycle de l'invention, dans le plan IV-IV de la figure 3, i.e. dans un plan vertical pour le cycle en position d'utilisation. On reconnaît le coussinet 23 et le tube 15. Le tube latéral 21 présente une section carrée et est disposé à l'intérieur du tube 15, mais décalé par exemple de 45° par rapport à celui-ci, de sorte qu'en section, les angles extérieurs se trouvent sensiblement sur les côtés du carré formé par la section intérieure du tube carré 15. Dans les espaces ménagés entre les tubes sont disposés des amortisseurs 26 (par exemple allongés de section triangulaire) en un matériau élastique. Les amortisseurs 26 amortissent et limitent le mouvement de pivot du tube latéral 21 du bras 13 à l'intérieur du tube carré 15. On obtient grâce à cette structure un montage avec suspension du bras 13, et donc de la ou des roues arrière sur l'avant du cadre 14. Le cas échéant, on peut aussi prévoir des moyens de blocage du mouvement de pivot du bras monopoutre 13 par rapport au reste du cadre, comme par exemple grâce une bille 26' dans un ou plusieurs des amortisseurs 26. On peut aussi prévoir que le tube carré 21 a un côté tel qu'il tourne partiellement dans le tube 15. A cette fin, le tube carré 15 a un côté intérieur dont la dimension est comprise entre la dimension du côté extérieur du tube carré 21 et la dimension de la diagonale de celui-ci. Ainsi, le débattement du tube carré 21 à l'intérieur du tube carré 15 est limité.

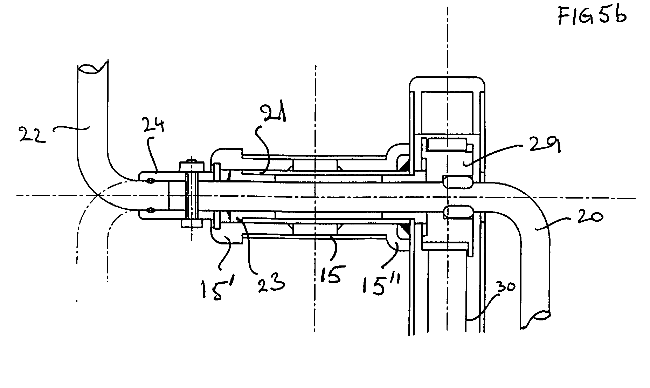

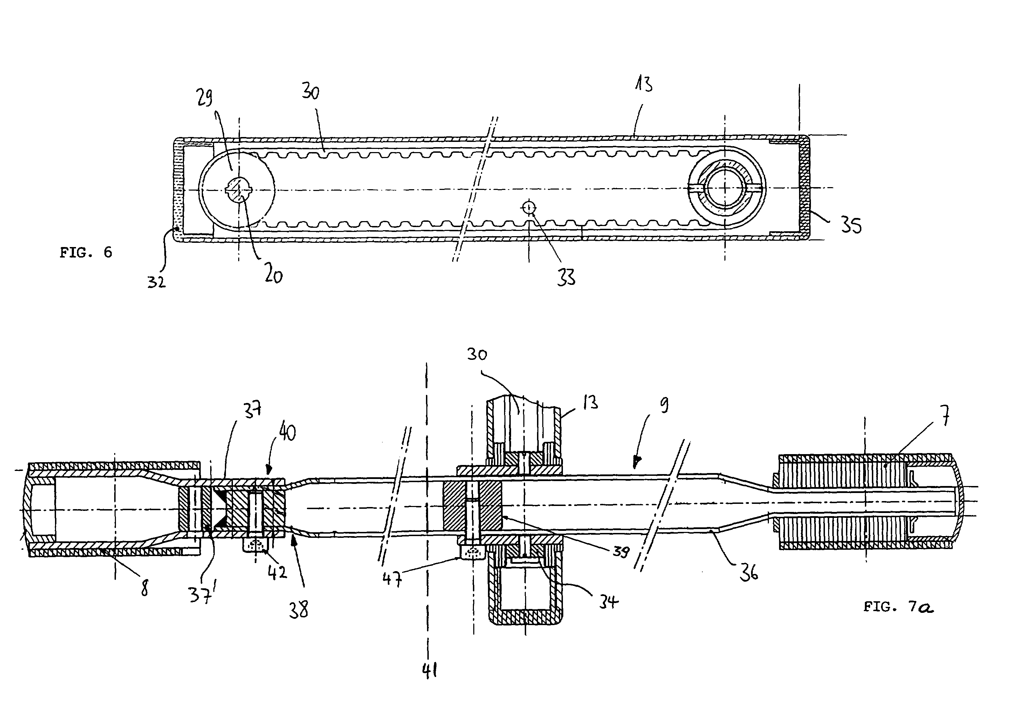

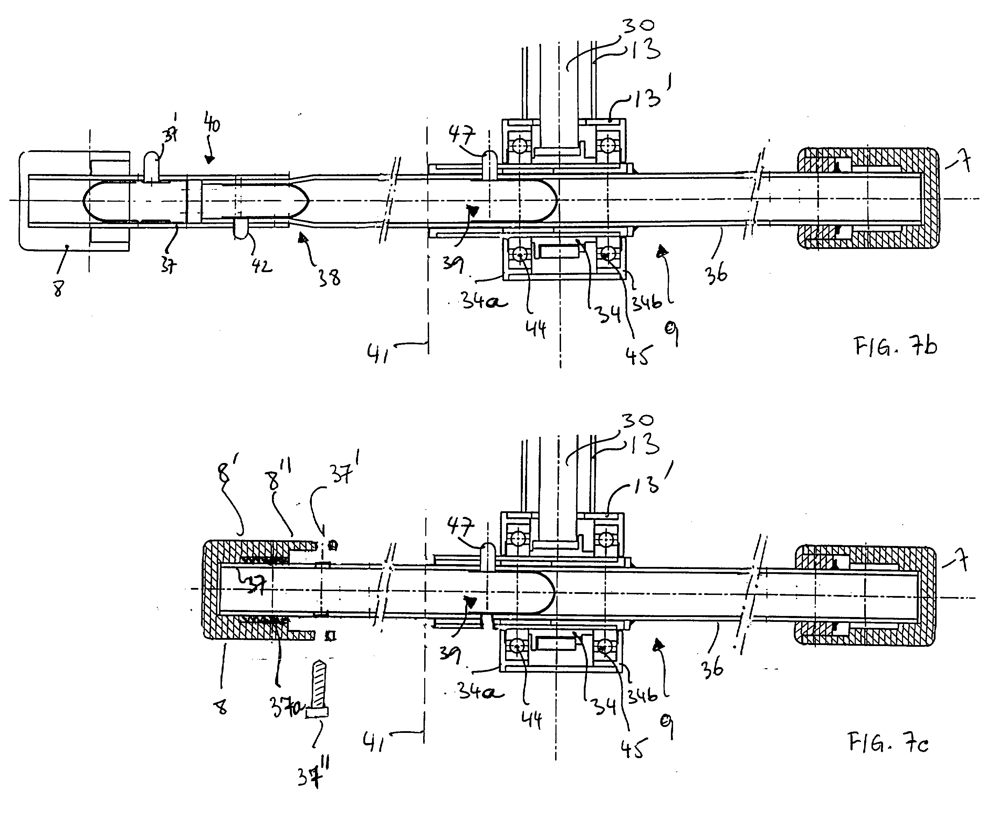

La figure 5a montre une vue partielle en coupe du bras monopoutre de l'invention, analogue à celle de la figure 3 (avec des tubes carrés), et montrant le système de transmission. On reconnaît sur la figure 5 les éléments déjà décrits en référence à la figure 3, qui ne sont pas décrits à nouveau. En outre, une bague plastique 31 assurant le blocage droit en translation de l'ensemble des deux manivelles est enfilée autour du cylindre 24 et est maintenue en position par exemple par une rondelle d'arrêt à griffe 25. Le blocage gauche de l'ensemble des deux manivelles se produit par la mise en butée de l'écrasement 29" de la manivelle 20 et/ou du pignon 29 sur la rondelle 29' enfilée autour de la manivelle 20, de telle sorte que la rondelle 29' puisse prendre appui sur la paroi intérieure du bras 13. On assure ainsi une liaison pivot entre le tube latéral 21 et les manivelles 20 et 22. La bague 31 assure le blocage axial du tube 15 par rapport au tube latéral 21. En outre, dans une configuration lui permettant de s'emboîter et de se positionner en appui sur le carré 15, la bague 31 constitue un palier pour l'ensemble des manivelles 20 et 22 et la rondelle 29', épaulée et en appui sur le pignon 29 bloqué en rotation et en translation, constituant par exemple un palier opposé. Sont aussi représentés à la figure 5 un pignon 29 monté bloqué en rotation et en translation sur la manivelle 20, une rondelle 29' à l'intérieur du bras monopoutre 13, et une courroie 30 située dans le bras 13 et engrenant sur le pignon 29, comme cela apparaît plus clairement à la description de la figure 6.

On pourrait aussi prévoir un mécanisme de roue libre en montant le pignon 29 sur la manivelle droite par un mécanisme à rochets ou à cliquet. On pourrait de la même façon prévoir un mécanisme approprié de freinage par rétropédalage.

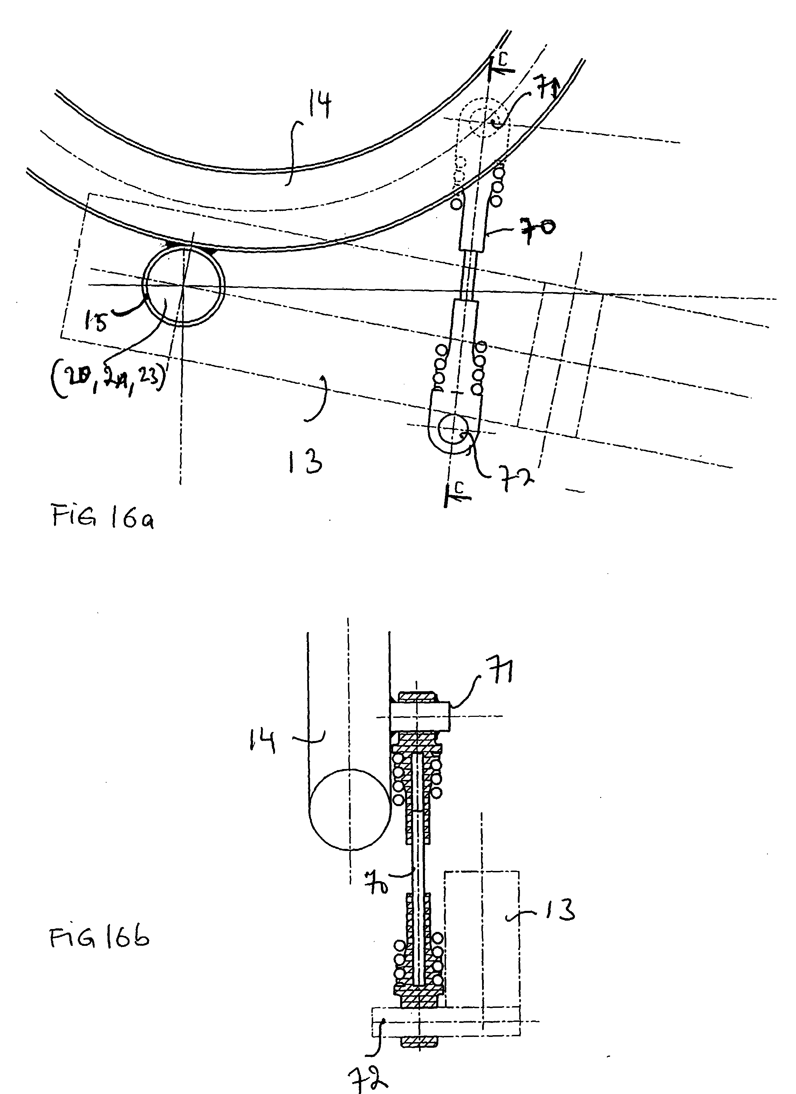

La figure 5b montre une vue partielle en coupe du bras monopoutre de l'invention, dans lequel les tubes carrés sont remplacés par des tubes de section circulaire, le bras monopoutre étant monté sur le cadre de la façon indiquée aux figures 16a et 16b. Selon le mode de réalisation indiqué, la manivelle 22 et le cylindre 24 sont solidaires. L'ensemble bras monopoutre et axe 20 est introduit dans un cylindre 15 au niveau des paliers 15' et 15" d'un côté du cadre, lesdits paliers étant montés respectivement aux extrémités opposées du tube 15. Le bras monopoutre est alors mis en butée sur le palier 15" et est bloqué en translation par la manivelle et le cylindre (22, 24) au niveau du palier 15' par l'intermédiaire d'une vis solidarisant ainsi les axes de manivelle (20, 22). Les autres éléments correspondent dans leur forme et/ou leur fonction à des éléments déjà décrits dans les figures précédentes et ne sont pas repris.

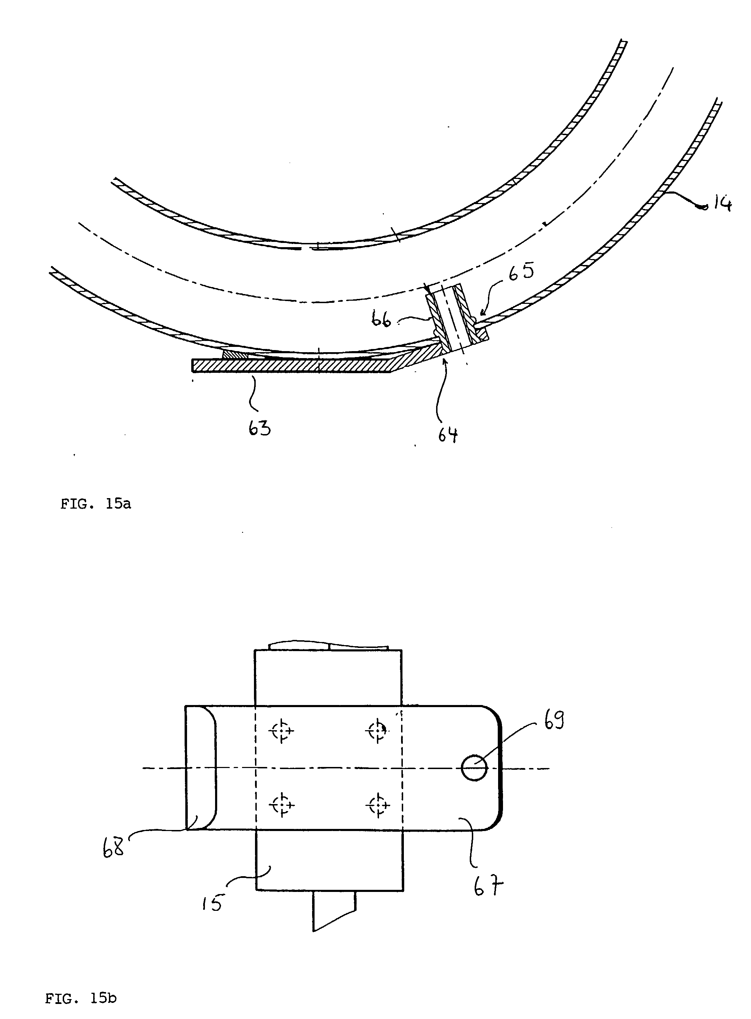

Le montage du bras monopoutre et du système de transmission peut s'effectuer de la façon suivante. Le tube latéral 21 est soudé sur le bras 13. On dispose dans le bras 13 la courroie 30 et le pignon 29 et la rondelle 29', et on monte la manivelle 20 à travers le pignon 29 et la rondelle 29'. On monte ensuite sur la manivelle 20 le coussinet 23, puis le cylindre 24, que l'on fixe par collage ou goupillage. L'ensemble ainsi constitué est monté sur le reste du cadre en introduisant le tube latéral 21 dans le tube carré 15 et en disposant entre ceux-ci les amortisseurs 26, avec le cas échéant la bille. On dispose sur le cylindre 24 la bague 31, et la rondelle 25; on colle ou on goupille ensuite la manivelle gauche dans le cylindre 24. On obtient ainsi un montage rapide et simple de l'ensemble pédalier bras monopoutre sur la partie avant 14 du cadre 13. Pour le démontage, il suffit par exemple de démonter la goupille de la manivelle gauche, de retirer la rondelle 25 puis la bague 31, et on peut séparer la partie avant du cadre de l'ensemble pédalier/bras monopoutre/roue(s). Le tube carré 15 peut aussi être soudé sur la partie inférieure du cadre 14. Ce tube 15 pourrait aussi être fixé au cadre par l'intermédiaire d'une platine (63), ce mode de fixation étant décrit plus en détails en référence aux figures 15a et 15b. Le montage du bras monopoutre et du système de transmission peut aussi s'effectuer en enfilant le bras monopoutre 13 par l'intermédiaire du tube 21 et l'axe 21 de la manivelle droite dans un cylindre 15 fixé sur la cadre, puis solidarisation par l'autre manivelle de l'autre côté du cadre.

La figure 6 montre une vue en coupe du bras monopoutre, dans un plan parallèle au plan longitudinal du cycle. On reconnaît sur la figure 6 le bras 13, la section de la manivelle 20, le pignon 29, qui est bloqué à rotation et en translation par rapport à la manivelle 20 (ou encore monté de sorte à assurer une roue libre), et la courroie 30. Le bras est fermé à son extrémité avant par un bouchon avant 32. Sensiblement en son milieu, le bras 13 est percé d'un trou 33 permettant si nécessaire de fixer les stabilisateurs latéraux représentés à la figure 2. A l'arrière, le bras présente des orifices pour le passage d'un arbre et comprend un pignon arrière entraîné par la courroie 30, ces éléments étant décrits plus en détail dans la suite. Est enfin prévu un bouchon arrière 35, fermant l'extrémité arrière du bras monopoutre 13.

La structure de bras monopoutre qui vient d'être décrite en référence aux figures 3 à 6 constitue un mode de réalisation avantageux de l'invention. Toutefois, elle ne fait que faciliter la transformation du cycle de l'invention de bicyclette en tricycle, et n'est pas indispensable pour cette transformation. On peut aussi mettre en oeuvre l'invention décrite en référence aux figures 7 à 10, sans utiliser le bras monopoutre des figures 3 à 6.

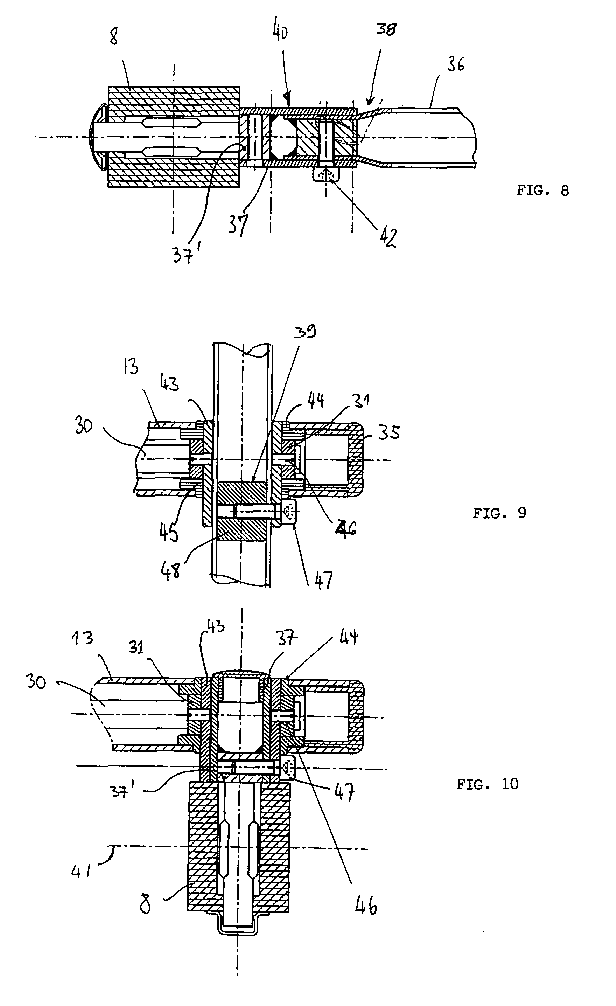

La figure 7a montre une coupe partielle dans un plan horizontal du cycle de l'invention, au niveau des roues arrières, dans un configuration tricycle. On reconnaît sur la figure 7a le bras 13, les roues arrière 7 et 8, et l'arbre 9. L'arbre 9 est monté sur le bras 13 de sorte à être entraîné en rotation par la courroie 30 et le pignon arrière 34. Un mode de réalisation de la liaison entre l'arbre et le bras monopoutre 13 est décrit plus en détail à la figure 10. L'arbre 9 est constitué de deux parties, à savoir un arbre de tricycle 36 et un arbre de bicyclette 37. A une extrémité de l'arbre de tricycle est montée une roue 7; à l'autre extrémité, l'arbre de tricycle présente des moyens d'accouplement 38 à l'arbre de bicyclette 37. Entre la roue 7 et les moyens d'accouplement 38, au voisinage en son milieu, l'arbre de tricycle 36 présente des moyens de fixation 39 au bras monopoutre.

A une extrémité de l'arbre de bicyclette 37 est montée une roue 8; l'autre extrémité de l'arbre de bicyclette présente des moyens d'accouplement 40 à l'arbre de tricycle 36, ou au bras monopoutre 13.

La longueur totale de l'arbre de bicyclette 37 et de l'arbre de tricycle 36, dans leur état assemblé, i.e. lorsqu'ils sont accouplés grâce aux moyens 38 et 40, correspond à la distance devant séparer les roues dans la configuration tricycle du cycle de l'invention. La longueur de l'arbre de bicyclette 37 est telle que lorsque l'arbre est monté sur le bras monopoutre 13, la roue 8 se trouve dans le plan médian du vélo, représenté par la ligne 41 de la figure 7. De plus, l'arbre de tricycle présente les moyens de fixation 39 à une distance telle que lorsque l'arbre de tricycle est fixé, les deux roues sont situées symétriquement par rapport à cette ligne 41.

Le fonctionnement du cycle de l'invention est le suivant. Pour une configuration tricycle, on monte l'arbre de tricycle 36 sur le bras monopoutre 13, à l'aide des moyens de fixation 39 (et la vis 47), de sorte qu'il soit entraîné par le pignon arrière 34. On assemble ensuite l'arbre de bicyclette 37 sur l'arbre de tricycle 36, à l'aide des moyens d'accouplement 38 et 40 (et la vis 42). De la sorte, on obtient un arbre 9 avec deux roues 7 et 8. Pour une configuration bicyclette, on monte directement l'arbre de bicyclette 37 sur le bras monopoutre 13, à l'aide des moyens d'accouplement 40 et 37' (et la vis 47), de sorte qu'il soit entraîné par le pignon arrière 34. On n'utilise pas l'arbre de tricycle 36.

Les opérations permettant de passer d'une configuration à l'autre sont simples et rapides. L'utilisation du bras monopoutre permet de simplifier autant que faire se peut les moyens d'accouplement 39 (vis 47) et 40 (et 37' et vis 42) et les moyens de fixation 38. Il est clair que l'on pourrait aussi utiliser un cadre de vélo classique, par exemple en prévoyant des moyens d'accouplement et de fixation plus complexes, et en y incorporant si nécessaire des pignons d'entraînement.

La figure 7b montre une coupe partielle dans un plan horizontal d'une variante du cycle de l'invention, au niveau des roues arrières, dans un configuration tricycle. On reconnaît sur la figure 7b le bras 13, et l'arbre 9. L'arbre 9 est monté sur le bras 13 de sorte à être entraîné en rotation par la courroie 30 et le pignon arrière 34. Ce pignon 34 est bloqué par encastrement de deux flasques 34a et 34b à l'intérieur d'un tube 13'. Le tube 13' positionné perpendiculairement au bras 13 et solidaire de ce dernier est ajouré de manière à laisser passer la courroie de transmission 30 autour du pignon 34. A l'intérieur des flasques 34a et 34b sont prévus des roulements 44 et 45 pour assurer un frottement minimum. L'arbre 9 est constitué de deux parties, à savoir un arbre de tricycle 36 et un arbre de bicyclette 37. A une extrémité de l'arbre de tricycle est montée une roue 7; à l'autre extrémité, l'arbre de tricycle présente des moyens d'accouplement 38 à l'arbre de bicyclette 37. Entre la roue 7 et les moyens d'accouplement 38, au voisinage en son milieu, l'arbre de tricycle 36 présente des moyens de fixation 39 au bras monopoutre (comprenant un ressort-cliquet ou bouton-poussoir 47). Pour une configuration tricycle, on monte l'arbre de tricycle 36 sur le bras monopoutre 13, à l'aide des moyens de fixation 39 (et le ressort-cliquet ou bouton-poussoir 47), de sorte qu'il soit entraîné par le pignon arrière 34. On assemble ensuite l'arbre de bicyclette 37 sur l'arbre de tricycle 36, à l'aide des moyens d'accouplement 38 et 40 (dont le ressort-cliquet ou bouton-poussoir 42). De la sorte, on obtient un arbre 9 avec deux roues 7 et 8. Pour une configuration bicyclette, on monte directement l'arbre de bicyclette 37 sur le bras monopoutre 13, à l'aide des moyens d'accouplement 40 et le ressort-cliquet ou bouton-poussoir 37', ce dernier prenant alors la place précédemment occupé par le ressort-cliquet ou bouton-poussoir 47, de sorte que l'arbre 37 soit entraîné par le pignon arrière 34. On n'utilise pas l'arbre de tricycle 36.

La figure 7c montre une coupe partielle dans un plan horizontal d'une variante du cycle de l'invention, au niveau des roues arrières, dans un configuration tricycle. Par rapport aux deux variantes précédentes, on notera que l'arbre de bicyclette 37 est intégré à la roue; cette roue présente alors un évidemment avec un palier, définissant deux zones de section différentes 8' et 8". La zone de section la plus grande 8" sert à être montée directement sur les moyens de fixation 39 en configuration bicyclette tandis que la zone de section la plus faible 8' sert à recevoir l'arbre de tricycle. L'arbre de bicyclette 37 est confondu à une extrémité avec la roue 8 qu'il reçoit, tandis qu'à l'autre extrémité il comporte des moyens d'accouplement 40 qui se décomposent en des moyens 37' et 37" pour l'accouplement au cadre et à l'axe de tricycle 36 et des moyens 37a, disposés en 8', sous forme par exemple d'un filetage, pour accoupler l'arbre de tricycle au niveau des moyens d'accouplement 38.

La figure 8 montre une vue à plus grande échelle des moyens d'accouplement 38 et 40 de la figure 7. Les moyens d'accouplement 38 de l'arbre de tricycle 36 sont formés par un rétreint du tube formant l'arbre à l'intérieur duquel un rondin taraudé peut être inséré et fixé. De la sorte, l'extrémité de l'arbre 36 peut s'engager dans l'arbre 37. Une vis 42 permet de fixer l'arbre 36 par rapport à l'arbre 37. On obtient ainsi un assemblage simple et précis de l'arbre de tricycle 36 et de l'arbre de bicyclette 37.

La figure 9 montre une vue à plus grande échelle des moyens de fixation de la figure 7. A son extrémité arrière, la poutre 13 présente des orifices dans lesquels est monté un cylindre de support 43, par l'intermédiaire de coussinets antifriction ou des roulements à billes ou autre 44 et 45. Ces derniers servent en outre de flasques pour le pignon arrière 31, qui est monté bloqué à rotation sur le cylindre de support 43. On pourrait aussi prévoir un mécanisme de roue libre en montant le pignon 31 sur le support 43 par un mécanisme à rochets ou à cliquets. Une ou plusieurs vis 46 assure(nt) le blocage en translation de l'ensemble. L'assemblage peut se faire de la façon suivante. Les coussinets antifriction 44 et 45 sont montés dans les orifices de la poutre 13. On dispose ensuite le pignon 31, entouré de la courroie 30, en regard des orifices dans le bras 13. On introduit ensuite le cylindre de support 43 à travers les coussinets et le pignon et on fixe l'ensemble en translation à l'aide d'une vis 46. On peut utiliser d'autres moyens de fixation, par exemple bloquer en translation le pignon 31 comme le pignon avant 29, ou disposer des circlips à l'extérieur du bras monopoutre, etc...

La vis 47 assure le blocage en translation et en rotation de l'arbre de tricycle 36 et du cylindre de support 43 (pouvant être taraudé). Elle permet un montage et un démontage rapide de l'arbre de tricycle 36. Avantageusement, on prévoit dans l'arbre de tricycle un rondin 48 taraudé pour recevoir la vis 42 et empêcher l'écrasement de l'arbre de tricycle. Le rondin 48 peut être fixé par soudage.

La figure 10 montre une vue en coupe à plus grande échelle du cycle de l'invention dans la configuration bicyclette. Comme expliqué en référence à la figure 7, dans cette configuration, l'arbre de bicyclette 37 est monté directement sur le bras monopoutre 13. On peut monter l'arbre de bicyclette à l'aide de la vis 47, de la même façon que l'arbre de tricycle: l'extrémité de l'arbre de bicyclette est introduit dans le cylindre de support 43 et la vis 47 assure le blocage en translation et en rotation de l'arbre de bicyclette 37 et du cylindre de support 43 par l'intermédiaire du support de fixation 37'.

Comme représenté sur la figure 10, on peut prévoir sur l'arbre de bicyclette un manchon pour le montage de la roue, qui permet le montage de roues de 12 pouces. On peut ainsi de façon économique assurer le montage des deux types de roues les plus communs, ou plus généralement de tout type de roues y compris celles pouvant être équipées de mécanismes de roue libre. Bien entendu, le support de roue de l'arbre de tricycle 36 peut présenter la même configuration. On peut aussi monter sur l'arbre de roue avant le même type de dispositif permettant le montage de différentes roues.

Dans les figures 8, 9 et 10, les vis peuvent être remplacées par des ressorts-cliquets ou boutons-poussoirs et inversement par tout autre moyen de fixation non nécessairement décrit ici.

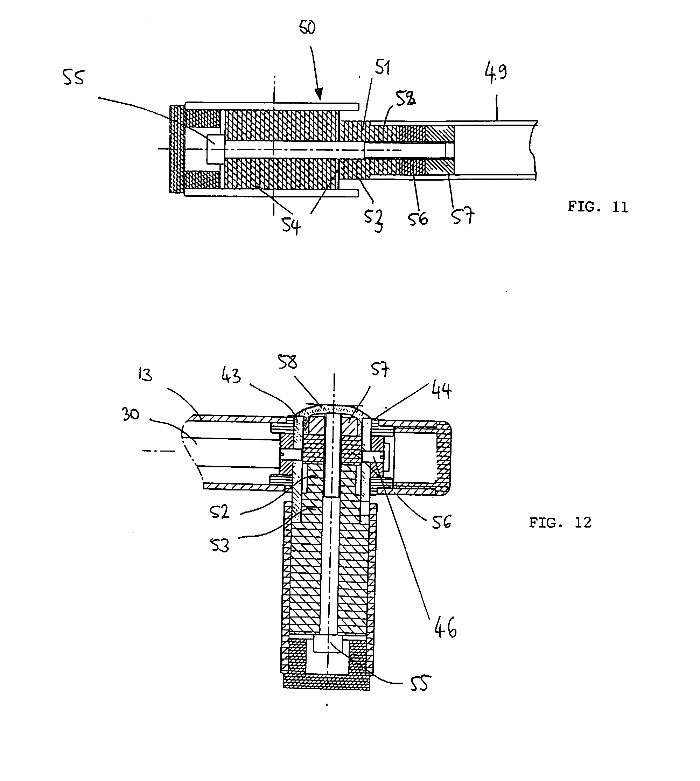

La figure 11 montre une vue analogue à celle de la figure 8, dans un deuxième mode de réalisation des moyens d'accouplement de la figure 7; dans ce mode de réalisation, l'extrémité de l'arbre de tricycle 49 ne présente pas de rétreint. L'arbre de bicyclette 50 comprend un adaptateur 51, avec une section de petit diamètre 52 et une section de diamètre plus important 53. La section de petit diamètre 52 est susceptible d'être introduite avec un faible jeu à l'intérieur de l'extrémité du tube formant l'arbre de tricycle 49. L'adaptateur 51 est collé sur un manchon 54 sur lequel une roue peut être montée. Une vis axiale 55 traverse le manchon 54, et l'adaptateur 51. Sur l'extrémité taraudée de la vis 55, qui dépasse de l'adaptateur 51 est enfilée une bague 56 en caoutchouc ou en matière compressible. Un écrou 57 est vissé à l'extrémité de la vis 55.

Le montage de l'arbre de bicyclette 50 dans l'arbre de tricycle 49 s'effectue en introduisant dans l'extrémité de l'arbre de tricycle l'écrou 57, la bague 56, et la section de petit diamètre 52 de l'adaptateur 51, de sorte que la section de grand diamètre 53 vienne en butée contre l'extrémité de l'arbre de tricycle. On serre ensuite la vis 55, et la bague 56, comprimée par l'écrou 57 contre l'adaptateur 51, s'étend contre la paroi interne de l'arbre de tricycle, de sorte à assurer l'accouplement des deux arbres. Le démontage s'effectue de façon inverse.

La figure 12 montre une vue analogue à celle de la figure 10, dans un deuxième mode de réalisation des moyens d'accouplement de la figure 7; l'arbre de bicyclette 50 se monte à l'intérieur du cylindre de support 43 comme à l'intérieur de l'arbre de tricycle 49. Toutefois, c'est la section de grand diamètre 53 de l'adaptateur 51 qui vient s'appuyer contre la paroi interne du cylindre de support 43. On peut prévoir un bouchon 58 sur le cylindre de support 43 pour masquer l'écrou 57.

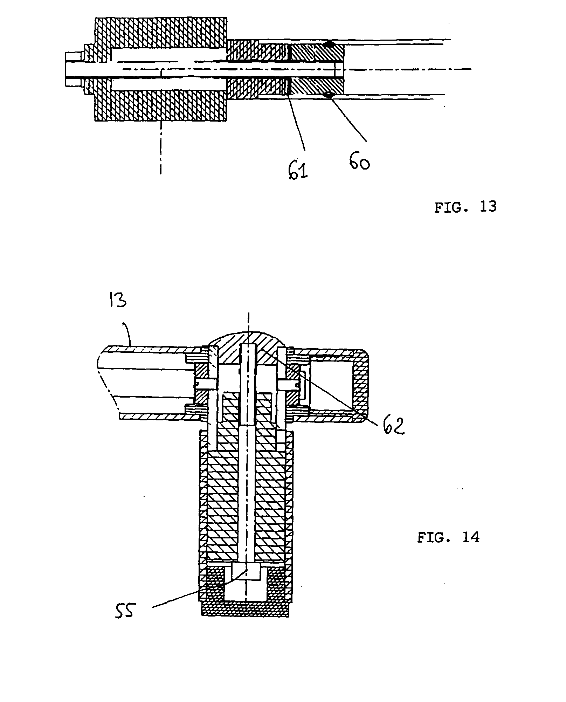

La figure 13 montre une vue analogue à celle de la figure 8, dans un troisième mode de réalisation des moyens d'accouplement de la figure 7; le troisième mode de réalisation est semblable au deuxième mode de réalisation, à cela près que l'écrou 57 est remplacé par un écrou 60 soudé à l'intérieur de l'arbre de tricycle. La bague 56 est aussi remplacée, par une simple rondelle 61. Le montage et le démontage s'effectuent par simple vissage ou dévissage de la vis 55 dans l'écrou 60.

La figure 14 montre une vue analogue à celle de la figure 10, dans un troisième mode de réalisation des moyens d'accouplement de la figure 7; dans ce cas est prévu un écrou bouchon 62 amovible. L'écrou 62 est disposé d'un côté du cylindre de support 43 et la vis 55 de l'arbre de bicyclette est vissée dans l'écrou 62, en traversant le cylindre de support 43. L'arbre de bicyclette est fixé sur le cylindre 43, l'extrémité du manchon 54 s'appuyant contre le cylindre 43.

Les figures 15a et 15b montrent un mode de fixation du tube carré 15 sur la cadre 14. Une platine 63 est soudée sur la partie inférieure du cadre 14, cette platine présentant à une de ses extrémités un orifice 64 auquel correspond un orifice identique 65 percé dans la partie du cadre lui faisant vis-à-vis. Ces orifices 64 et 65 sont maintenus ensemble par exemple à l'aide d'un écrou à serrage rapide 66. Une seconde platine 67, susceptible d'épouser la forme de la platine 63, est soudée sur le tube carré 15. A l'une de ses extrémités, la platine 67 est pliée de manière à former une gouttière 68 et à l'extrémité opposée de celle-ci est percé un orifice 69 identique et faisant face aux orifices 64 et 65. En insérant la platine 63 dans la gouttière 68, les deux platines peuvent être solidarisées par une vis serrée dans l'écrou à serrage rapide mentionné ci-dessus. Le démontage s'effectue par les opérations inverses.

Les figures 16a et 16b représentent un mode de réalisation dans lequel le bras monopoutre 13 est fixé à la partie avant 14 du cadre par l'intermédiaire d'un amortisseur externe 70, la figure 16b correspondant à la vue en coupe de la figure 16a selon C-C. La bras monopoutre est traversé par le mécanisme d'entraînement, ce mécanisme venant s'enficher dans un cylindre 15 soudé au niveau inférieur de la partie avant du cadre 14. Un amortisseur externe 70 relie le bras monopoutre et le cadre, cet amortisseur étant maintenu à chaque extrémité par enfichage dans des axes 71, 72 disposés à des endroits appropriés. Lors de l'enfichage du mécanisme d'entraînement, l'amortisseur est mis en place aussi par enfichage et est maintenu enserré dans cette position puisque le bras monopoutre et le cadre sont disposés chacun d'un côté.

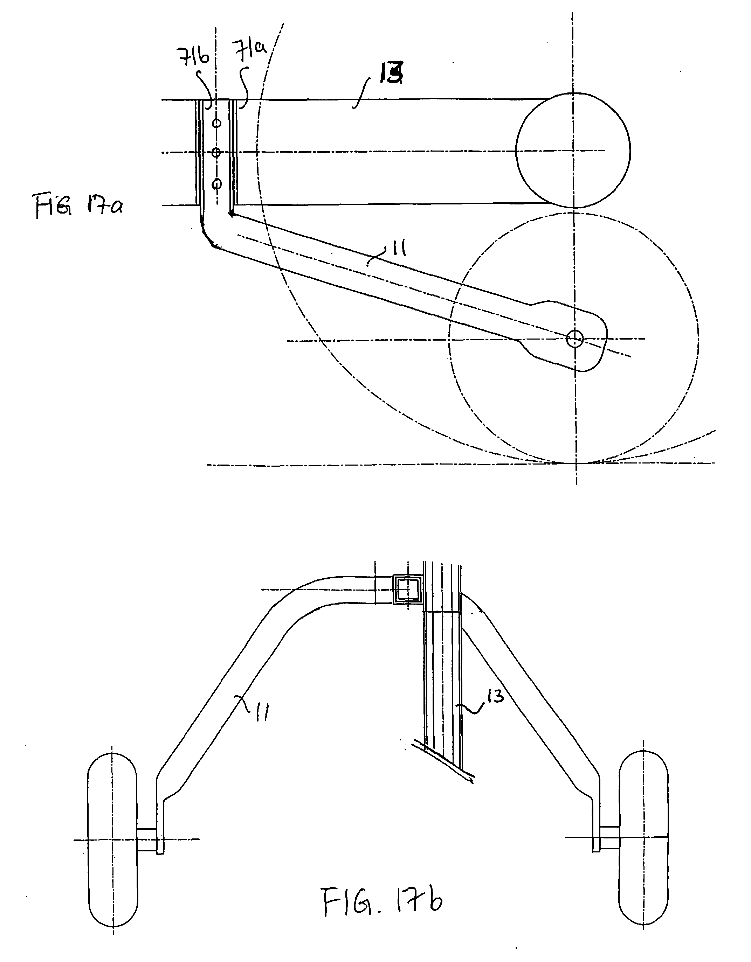

Les figures 17a et 17b représentent de dessus et de côté un mode de fixation des stabilisateurs latéraux 11, qui sont montés par encastrement de deux tubes 71a et 71b, par exemple de section carrée. On peut prévoir des trous équidistants percés dans le tube carré solidaire du bras monopoutre qui peuvent recevoir un bouton-poussoir situé sur le tube encastré. On obtient ainsi des stabilisateurs réglables en hauteur, mais dont la mise en place (et l'enlèvement) ainsi que le réglage sont extrêmement aisés.

Les trois modes de réalisation des moyens d'accouplement présentent chacun des avantages différents, et ils peuvent tous être utilisés pour la mise en oeuvre de l'invention, et le cas échéant être combinés.

Bien entendu, la présente invention n'est pas limitée aux modes de réalisation décrits et représentés, mais elle est susceptible de variantes. Par exemple, le bras monopoutre n'est pas nécessairement constitué d'une pièce unique, mais peut être formé par assemblage de plusieurs pièces. On peut prévoir une suspension des roues en porte à faux ou une transmission décalée du plan longitudinal du cycle, sans pour autant utiliser un bras monopoutre du type de celui des figures 3 à 6.

On peut aussi prévoir d'autres moyens d'accouplement que les moyens 38 et 40, d'autres moyens de fixation que les moyens de fixation 39 décrits plus haut, en fonction de la structure du cadre du cycle, et d'autres moyens de transmission que la courroie 30.

Enfin, il est clair que l'invention s'applique à d'autres types de produits, tels les patinettes, les karts à pédales, et à tous types de jouets ou moyens de déplacement à roues. On entendra par bicyclette dans la présente description non seulement la bicyclette classique, mais plus généralement tout type de produit présentant un arbre avec une seule roue: le terme pourrait ainsi couvrir une patinette avec une roue arrière unique. On entend de la même façon par tricycle tout type de produit présentant un arbre avec deux roues: le terme pourrait ainsi couvrir une patinette avec deux roues arrières.

Le cadre du présent cycle ainsi que le système d'entraînement et le bras monopoutre peuvent en outre être utilisés pour la réalisation de cycles non-transformables; sur la base d'une même structure il est donc possible de décliner trois produits distincts (bicyclette, tricycle et cycle évolutif). Notamment, il est possible d'obtenir une bicyclette comportant le bras monopoutre selon le mode de réalisation de la figure 5b, et/ou selon les figures 16a/16b, avec éventuellement les stabilisateurs, qui peuvent être fixés selon le mode de réalisation décrit ci-dessus. Le bras monopoutre, son mode de fixation sur le cadre par l'intermédiaire de la transmission, la transmission par courroie intégrée, et la fixation par l'intermédiaire d'un amortisseur externe, le mode de fixation des stabilisateurs latéraux (par encastrement ou avec un étrier et une semelle caoutchouc) sont des variantes constituant des inventions distinctes et susceptibles de s'appliquer à tous les cycles.

## Revendications

1. Cycle évolutif, entre une configuration tricycle et une configuration bicyclette, comprenant un cadre (4, 13, 14), avec
- dans la configuration bicyclette, un arbre de bicyclette (37, 50) monté sur le cadre (4, 13, 14) et pouvant supporter une roue arrière (8); et
- dans la configuration tricycle, en outre un arbre de tricycle (36, 49) pouvant supporter une deuxième roue arrière (7), et susceptible d'être couplé avec ledit arbre de bicyclette (37) pour former un arbre (9) supportant deux roues (7, 8) et monté sur le cadre (4, 13, 14),
- l'arbre de bicyclette (37, 50) comprenant à une extrémité des moyens (40) d'accouplement soit au cadre (13), soit à l'arbre de tricycle (36, 49), et à l'autre extrémité des moyens de support d'une roue (8),
- l'arbre de tricycle (36, 49) comprenant à une extrémité des moyens (38) d'accouplement à l'arbre de bicyclette (37, 50), à l'autre extrémité des moyens de support d'une roue, et, entre les moyens (38) d'accouplement à l'arbre de bicyclette (37, 50) et les moyens de support d'une roue, des moyens de fixation au cadre (4, 13, 14).

2. Cycle évolutif selon la revendication 1, caractérisé en ce que les moyens d'accouplement (38) de l'arbre de tricycle (36) sont formés par un rétreint à l'extrémité de celui-ci, permettant à l'arbre de tricycle (36) de s'engager dans l'arbre de bicyclette (37).

3. Cycle évolutif selon la revendication 1, caractérisé en ce que les moyens d'accouplement (38) de l'arbre de tricycle (49) sont formés par un adaptateur (51), permettant à l'arbre de tricycle (49) de se solidariser de l'arbre de bicyclette (50).

4. Cycle évolutif selon l'une des revendications 1 à 3, caractérisé en ce que le cadre (4) comprend un bras monopoutre (13) monté sur la partie avant du cadre (14) et sur lequel la roue est montée en porte à faux dans la configuration bicyclette.

5. Cycle évolutif selon l'une des revendications 1 à 4, caractérisé en ce que le cadre (4) comprend un bras monopoutre (13) monté sur la partie avant du cadre (14) duquel il est détachable.

6. Cycle évolutif selon la revendication 4 ou 5, caractérisé en ce que le bras monopoutre (13) est monté sur la partie avant du cadre (14) par une suspension (15, 21, 26; 70).

7. Cycle évolutif selon la revendication 6, caractérisé en ce que la suspension (26) est intégrée au bras monopoutre (13) au voisinage de la fixation du bras monopoutre (13) sur le reste du cadre (4, 14).

8. Cycle évolutif selon la revendication 6, caractérisé en ce que le bras monopoutre (13) est monté sur le reste du cadre (4, 14) par l'intermédiaire d'un amortisseur externe (70).

9. Cycle évolutif selon l'une quelconque des revendications 5 à 8, caractérisé par une transmission (30) intégrée au bras monopoutre (13), et entraînant l'arbre de bicyclette (37) ou de tricycle (36).

10. Cycle évolutif selon la revendication 9, caractérisé en ce que la transmission présente un mécanisme de roue libre et/ou un mécanisme de blocage par rétropédalage.

11. Bicyclette, constituée d'un cycle évolutif selon l'une des revendications 1 à 9, dans sa configuration bicyclette.

12. Bicyclette selon la revendication 11, comportant des stabilisateurs latéraux (11) fixés sur le cadre (4, 13, 14) par l'intermédiaire d'un étrier (11'), une semelle en caoutchouc étant présente entre l'étrier et le cadre.

13. Bicyclette selon la revendication 11 ou 12, comportant des stabilisateurs latéraux (11) réglables en hauteur.

## Patentansprüche

1. Von einer Dreirad- zu einer Fahrradkonfiguration erweiterbares Rad, umfassend einen Rahmen (4, 13, 14), mit
- in der Fahrradkonfiguration einer am Rahmen (4, 13, 14) angebrachten Fahrradachse (37, 50), die in der Lage ist, ein Hinterrad (8) zu tragen; und
- in der Dreiradkonfiguration, zusätzlich einer am Rahmen (4, 13, 14) angebrachten Dreiradachse (36, 49), die in der Lage ist, ein zweites Hinterrad und das mit dem Fahrradachse (37) unter Bildung einer zwei Räder (7, 8) tragenden Achse (9) kuppelbar ist, wobei
- die Fahrradachse (37, 50) an einem Ende Mittel (40) für die Kupplung entweder an der Fahrradachse (37, 50) oder an der Dreiradachse (36, 49) und am anderen Ende Mittel für das Tragen eines Rades (8) umfasst,
- die Dreiradachse (36, 49) an einem Ende Mittel (38) für die Kupplung an die Fahrradachse (37, 50), am anderen Ende Mittel für das Tragen eines Rades (8), und, zwischen den Kupplungsmitteln (38) an der Fahrradachse (37, 50) und den Tragemittel für ein Rad, Befestigungsmittel an den Rahmen (4, 13, 14) umfasst.

2. Erweiterbares Rad gemäß Anspruch 1, gekennzeichnet dadurch, daß die Kuppelmittel (38) der Dreiradachse (36) von einer Verengung an dessen Ende gebildet werden, wodurch die Dreiradachse (36) in die Fahrradachse (37) eingreifen kann.

3. Erweiterbares Rad gemäß Anspruch 1, gekennzeichnet dadurch, daß die Kuppelmittel (38) der Dreiradachse (49) von einem Adapter (51) gebildet werden, wodurch die Dreiradachse (36) mit der Fahrradachse (37) fest verbunden werden kann.

4. Erweiterbares Rad gemäß einem der Ansprüche 1 bis 3, gekennzeichnet dadurch, daß der Rahmen (4) einen einzigen Balken bildenden Arm (13) aufweist, welcher auf dem vorderen Teil des Rahmens (14) angebracht ist, wobei das Rad in der Fahrradkonfiguration fliegend gelagert ist.

5. Erweiterbares Rad gemäß einem der Ansprüche 1 bis 4, gekennzeichnet dadurch, daß der Rahmen (4) einen einzigen Balken bildenden Arm (13) aufweist, welcher auf dem vorderen Teil des Rahmens (14) angebracht ist, von welchem er ablösbar ist.

6. Erweiterbares Rad gemäß Anspruch 4 oder 5, gekennzeichnet dadurch, daß der einen einzigen Balken bildende Arm (13) auf dem vorderen Teil des Rahmens (14) mittels einer Aufhängung (15, 21, 26, 70) angebracht ist.

7. Erweiterbares Rad gemäß Anspruch 6, gekennzeichnet dadurch, daß die Aufhängung (26) mit dem einen einzigen Balken bildenden Arm (13) nahe der Befestigung des einen einzigen Balken bildenden Arm (13) an den Rest des Rahmens integriert ist.

8. Erweiterbares Rad gemäß Anspruch 6, gekennzeichnet dadurch, daß der einen einzigen Balken bildende Arm (13) an den Rest des Rahmens (4, 14) über einen äußeren Stoßdämpfer (70) angebracht ist.

9. Erweiterbares Rad gemäß einem der Ansprüche 5 bis 8, gekennzeichnet durch ein in den einen einzigen Balken bildenden Arm (13) integriertes Getriebe (30), welches die Fahrradachse (37) oder Dreiradachse (36) antreibt.

10. Erweiterbares Rad gemäß Anspruch 9, gekennzeichnet dadurch, daß das Getriebe (30) ein Freilaufmechanismus und/oder ein Rückbremsmechanismus aufweist.

11. Fahrrad, bestehend aus einem erweiterbaren Rad gemäß einem der Ansprüche 1 bis 9 in der Fahrradkonfiguration.

12. Fahrrad gemäß Anspruch 11, aufweisend seitlichen Stützräder (11), welche mittels eines Bügels (11') an den Rahmen (4, 13, 14) angebracht sind, wobei sich eine Gummisohle zwischen dem Bügel und dem Rahmen befindet.

13. Fahrrad gemäß Anspruch 11 oder 12, aufweisend höhenverstellbare seitliche Stützräder (11).

## Claims

1. A cycle adaptable between a tricycle configuration and a bicycle configuration, comprising a frame (4, 13, 14) with
- in said bicycle configuration, a bicycle axle (37, 50) mounted on said frame (4, 13, 14) and able to carry a rear wheel (8) ; and
- in said tricycle configuration, additionally a tricycle axle (36, 49) able to carry a second rear wheel (7), adapted to be coupled to said bicycle axle (37) to form an axle (9) carrying two wheels (7, 8), said axle being mounted on the frame (4, 13, 14),
- said bicycle axle (37, 50) comprises, at one end thereof, means (40) for coupling it either to said frame (13) or to said tricycle axle (36, 49), and means for carrying a wheel (8) at the other end thereof.
- said tricycle axle (36, 49) comprising, at one end thereof, means (38) for coupling it to said bicycle axle (37, 50), means for carrying a wheel at the other end thereof, and, between said means (38) for coupling it to said bicycle axle (37, 50) and said wheel carrying means, means for fixing the tricycle axle to the frame (4, 13, 14) .

2. The adaptable cycle according to claim 1, characterized in that said means (38) for coupling the tricycle axle (36) are formed by a portion of reduced cross-section at the end thereof, allowing said tricycle axle (36) to be engaged into said bicycle axle (37).

3. The adaptable cycle according to claim 1, characterized in that said means (38) for coupling the tricycle axle (49) are formed by an adaptor (51), allowing said tricycle axle (49) to be rendered integral with said bicycle axle (50).

4. The adaptable cycle according to one of claims 1 to 3, characterized in that said frame (4) comprises a single-beam arm (13) mounted on a forward portion of said frame (14) and on which a rear wheel is mounted in a cantilevered fashion, in said bicycle configuration.

5. The adaptable cycle according to one of claims 1 to 4, characterized in that said frame (4) comprises a single-beam arm (13) mounted on a forward portion of said frame (14) from which it is detachable.

6. The adaptable cycle according to claim 4 or 5, characterized in that said single-beam arm (13) is mounted at a forward portion of said frame (14) by suspension means (15, 21, 26; 70).

7. The adaptable cycle according to claim 6, characterized in that said suspension means (26) are integrated into said single-beam arm (13) in the region where said single-beam arm (13) is secured onto the remainder of said frame (4, 14).

8. The adaptable cycle according to claim 6, characterized in that said single-beam arm (13) is secured onto the remainder of said frame (4, 14) by means of an external shock absorber (70).

9. The adaptable cycle according to one of claims 5 to 8, characterized by transmission means (30) incorporated in said single-beam arm (13) and driving said bicycle axle (37) or said tricycle axle (36).

10. The adaptable cycle according to claim 9, characterized in that said transmission means includes a freewheel mechanism and/or a mechanism for braking by backpedaling.

11. A bicycle, constituted by an adaptable cycle according to one of claims 1 to 9 in its bicycle configuration.

12. The bicycle according to claim 10, carrying lateral stabilizers or side wheels (11) fixed on said frame by clamping means (11'), a rubber block being present between said clamping means and the frame.

13. The bicycle according to claim 10 or 11, comprising adjustable-height lateral stabilizers or side wheels (11) .
